# EUROPÄISCHE PATENTSCHRIFT

(11) **EP 2 043 890 B1**
(45) Veröffentlichungstag und Bekanntmachung des Hinweises auf die Patenterteilung: **02.06.2010**
(21) Anmeldenummer: 07730278.4
(22) Anmeldetag: 20.06.2007
(51) Int. Cl.: B60R 13/08, B61D 27/00, B60H 1/00

(54) **FAHRZEUG ZUR PERSONENBEFÖRDERUNG MIT BRANDSCHUTZ-SCHOTT**
PEOPLE CARRIER WITH A FIREWALL
VÉHICULE DE TRANSPORT DE PERSONNES AVEC CLOISON COUPE-FEU

(30) Priorität: 24.07.2006 DE 102006034676
(43) Veröffentlichungstag der Anmeldung: 08.04.2009
(73) Patentinhaber: SIEMENS AKTIENGESELLSCHAFT, 80333 München (DE)
(72) Erfinder: HÖFLER, Werner, 47829 Krefeld (DE)
(86) Internationale Anmeldenummer: PCT/EP2007/056156
(87) Internationale Veröffentlichungsnummer: WO 2008/012148

(56) Entgegenhaltungen:
- EP-A- 1 060 917
- DE-U- 7 433 396
- GB-A- 1 222 870

## Beschreibung

Die Erfindung bezieht sich auf ein Fahrzeug zur Personenbeförderung, mit einem Klimakanal, der in einem lang gestreckten, von Wandlungen begrenzten Zwischenraum geführt ist, und mit wenigstens einem im Wesentlichen senkrecht zu dem Klimakanal verlaufenden Schott zwischen dem Klimakanal und den Wandungen.

Aus der DE-7433396 U ist ein Fahrzeug zur Personenförderung bekannt, das einen Klimakanal aufweist, der in einem langgestreckten, von Wandungen begrenzten Zwischenraum geführt ist. Es ist auch ein im Wesentlichen senkrecht zu dem Klimakanal verlaufendes Schott vorgesehen, das den Klimakanal beispielsweise in der Mitte des Fahrzeugs unterbricht.

Bei einem Schienenfahrzeug als Beispiel für ein Fahrzeug zur Personenbeförderung ist es bekannt, den Klimakanal in einem Zwischenraum zu führen, der von einer Zwischendecke des Schienenfahrzeugs und dessen Dach begrenzt ist. Dieser Zwischenraum verläuft genauso wie der Klimakanal in Längsrichtung des Schienenfahrzeugs. Im Hinblick auf den Brandschutz ist die Vorschrift EBC 7900 01 05 zu berücksichtigen, wonach zum Verzögern der Ausbreitung von Flammen und heißen Gasen Schotts in regelmäßigen Abständen in dem Zwischenraum vorgesehen sein müssen.

Zur Einhaltung dieser Vorschriften wurden bisher Metallschotts zum Abdichten des Zwischenraums verwendet, die den Klimakanal umfassen und gegenüber den Wandungen des Zwischenraums abgedichtet sind.

Die Verwendung von Metallschotts zur Abdichtung des Zwischenraums hat den Nachteil, dass diese sehr genau an die örtlichen Gegebenheiten im Zwischenraum im Hinblick auf ihre Formgebung angepasst sein müssen.

Ausgehend hiervon liegt der Erfindung die Aufgabe zugrunde, ein Fahrzeug der eingangs genannten Art anzugeben, bei dem das Schott an jeweils vorhandene örtliche Gegebenheiten im Zwischenraum besser anpassbar ist.

Diese Aufgabe wird bei dem Fahrzeug zur Personenbeförderung der eingangs genannten Art dadurch gelöst, dass das wenigstens eine Schott aus einem textilen Brandschutz-Material hergestellt ist.

Die textile Ausführung des Schotts hat den Vorteil, dass eine erhöhte Anpassbarkeit an vorhandene Formen der Zwischendecke, des Daches und insbesondere des Klimakanals gegeben ist. Es ist auch der Fall zu betrachten, dass der Klimakanal selbst aus textilem Material besteht. In solchen Fällen ist die Verwendung eines ebenfalls textilen Schotts aus Brandschutz-Material von besonderem Vorteil.

Als günstige Beschichtungs-Materialien für das textile Schott sind applative Kohlebildner und intumeszierende Dünnschichtbildner zu nennen. Beide Materialgruppen weisen Brandschutz-Eigenschaften auf. Beide Beschichtungs-Materialien kommen dann zum Einsatz, wenn das textile Schott nicht bereits selbst aus Brandschutz-Material hergestellt ist. In vielen Fällen wird der Klimakanal, wenn er in Textilform vorliegt, aus Brandschutzmaterial bestehen und für das Schott wird dasselbe Material gewählt werden. In Fällen, wenn jedoch das Schott aus einem nicht-Brandschutz-geeigneten Material besteht, kann es mit Hilfe der beiden genannten Beschichtungs-Materialien "aufgerüstet" werden.

Bevorzugt ist das Schott lösbar mit dem Klimakanal und den Wandungen verbunden. Dies vereinfacht die Montage des Schotts, das üblicher Weise erst dann eingebaut wird, wenn bereits der Klimakanal innerhalb des Zwischenraums fertig installiert ist.

Die lösbare Verbindung des Schotts mit dem Klimakanal und den Wandungen gewährleistet günstige Wartungseigenschaften. Während die in dem Stand der Technik verwendeten Metallschotts, einmal eingebaut, nur unter sehr schwierigen Umständen wieder entfernbar sind, lässt sich das textile Schott einfach durch Lösen der Verbindung zu den Wandungen und dem Klimakanal aus dem Zwischenraum entnehmen und ggf. ersetzen oder instand setzen.

Das Schott kann über wenigstens ein Befestigungsband mit dem Klimakanal und den Wandungen verbindbar sein. Dabei kann das Befestigungsband insbesondere als Kettband ausgebildet sein. Auf diese Weise lässt sich besonders günstig die erwünschte lösbare Verbindung des Schotts mit dem Klimakanal und den Wandungen herbeiführen. Beispielsweise verläuft ein Teil des Befestigungsbandes entweder um den Klimakanal herum und entlang der Wandungen des Zwischenraums, die bei dem Beispiel eines Schienenfahrzeugs von dessen Dach und dessen Zwischendecke gebildet werden. Alternativ ist es auch möglich, dass das Schott an einer Stelle des Klimakanals eingebaut wird, bei der der Klimakanal selbst an dem Dach und der Zwischendecke über geeignete Halter befestigt ist. In diesem Fall kann das Befestigungsband von der Zwischendecke aus nach oben entlang der Halter des Klimakanals bis zum Dach, von da aus nach außen bis das Dach auf die Zwischendecke trifft und von da aus zurück zur Verbindungsstelle zwischen Klimakanal-Halter und Zwischendecke verlaufen.

Auch der Klimakanal selbst kann aus einem textilen Material hergestellt sein. Bei dieser Ausführungsform ist es möglich, dass ein Befestigungsband zur Anbindung des Schotts an den Klimakanal mit demselben vernäht ist. Das Befestigungsband, insbesondere wenn es als Klettband ausgebildet ist, ist dann Bestandteil des Klimakanals selbst.

Bevorzugt ist der Klimakanal zwischen in Längsrichtung des Fahrzeugs verlaufenden Schienen geführt, die dann die oben bereits angesprochenen Halter bilden.

Alternativ zu der Ausbildung des Klimakanals aus textilem Material kann dieser ebenso aus beigesteifen Material hergestellt sein, wobei er dann ebenfalls zwischen dem Dach und der Zwischendecke befestigt ist. Ein vorgesehenes Befestigungsband verläuft dann entlang der freien Außenseiten des Klimakanals.

Alternativ zu der Anbindung des Schotts mit Hilfe von wenigstens einem Befestigungsband kann das Schott ebenso wenigstens teilweise mit dem Klimakanal und/oder den Wandungen vernietet sein. Diese Art der Befestigung ist zwar schwerer zu Wartungszwecken lösbar, jedoch ergibt sich eine zuverlässigere Verbindung zwischen dem Schott und dem Klimakanal bzw. den Wandungen.

Bevorzugtes Ausführungsbeispiel der Erfindung ist, dass das Fahrzeug als Schienenfahrzeug vorliegt, wobei dann der Zwischenraum im Dachbereich des Schienenfahrzeugs verlaufen und die Wandungen von einem Dach und einer Zwischendecke des Schienenfahrzeugs gebildet werden können.

Bei alternativen Anwendungen der Erfindung können jedoch auch irgendwo in Fahrzeugen zur Personenbeförderung in einem Zwischenraum geführte Klimakanäle mit den hier näher beschriebenen textilen Schotts versehen werden.

Ausführungsbeispiele der Erfindung werden nachfolgend anhand der Zeichnungen noch näher erläutert. Es zeigen:
- Figur 1: eine horizontale Längsschnitt-Ansicht eines Schienenfahrzeug-Dachbereiches,
- Figur 2: eine Draufsicht eines textilen Schotts,
- Figur 3: eine vertikale Längsschnitt-Ansicht des Dachbereichs eines Schienenfahrzeugs von Figur 1,
- Figur 4: eine Querschnittsansicht des Dachbereichs von Figur 1,
- Figur 5: eine Detailansicht von Figur 4 und
- Figur 6: eine Detailansicht von Figur 3.

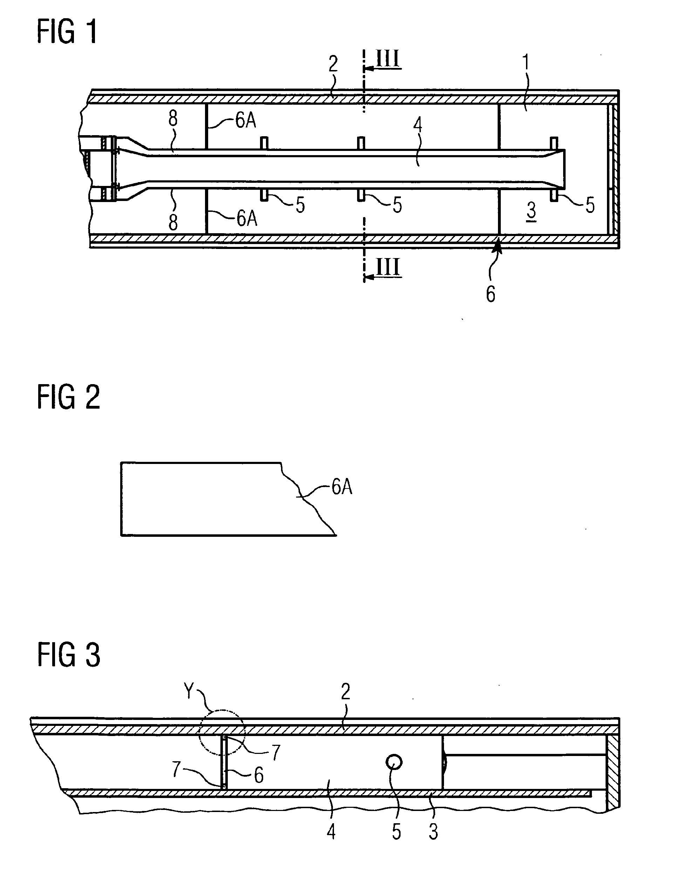

Figur 1 zeigt einen Längsschnitt eines Dachbereichs eines Schienenfahrzeugs. Ein Zwischenraum 1 im Dachbereich wird definiert durch äußere Wandungen, die von einem Dach 2 selbst und einer Zwischendecke 3, die oberhalb des Fahrgastraumes angeordnet ist, gebildet werden. In dem Zwischenraum 1 erstreckt sich in Längsrichtung des Schienenfahrzeugs ein textiler Klimakanal 4, der in vier Metallschienen 8 zwischen dem Dach 2 und der Zwischendecke 3 geführt ist.

Von dem Klimakanal 4 aus gehen Belüftungsanschlüsse 5, von denen aus Frischluft in jenseits der Zwischendecke 3 liegende Fahrgasträume geführt werden kann.

Der Zwischenraum 1 ist durch insgesamt zwei textile Schotts 6 unterteilt. Ein einzelnes Schott 6 schließt sich an den Klimakanal 4 an und erstreckt sich von dem Klimakanal 4 aus zu dem Dach 2 und der Zwischendecke 3 derart, dass der Zwischenraum 1 an dieser Stelle abgedichtet wird. Im vorliegenden Ausführungsbeispiel bilden der Klimakanal 4 und die vier Metallschienen 8, zwischen denen er geführt ist, eine Einheit, die sich zwischen der Zwischendecke 3 und dem Dach 2 erstreckt, so dass in Querrichtung des Schienenfahrzeugs der Zwischenraum 1 unterteilt wird. Aus diesem Grund ist im vorliegenden Ausführungsbeispiel das Schott 6 zweiteilig ausgebildet, wobei jeder Teil einzeln mit dem Klimakanal 4, dem Dach und der Zwischendecke 3 zu Abdichtungszwecken verbunden wird.

Die Schotts 6 sind aus textilem Material und Brandschutzgeeignet, so dass sie eine Ausbreitung von Feuer, Rauch oder giftigen Gasen in Längsrichtung des Schienenfahrzeugs verlangsamen bzw. vermeiden. Die Schotts 6 sind aus demselben textilen Brandschutz-Material hergestellt wie der Klimakanal 4. Sollte für die Schotts 6 ein nicht-brandschutz-geeignetes Material gewählt worden sein, kann eine nachträgliche "Aufrüstung" des Materials mit Hilfe von applativen Kohlebildnern oder intumeszierenden Dünnschichtbildnern erfolgen, welche die erforderlichen Brandschutzanforderungen erfüllen.

Eine Draufsicht eines Teil-Schotts 6A ist in Figur 2 dargestellt. Vor der Montage kann das Schott sich in einem eingerollten Zustand befinden, aus dem es dann in seine Endlage verbracht wird, in der im Wesentlichen eine Hälfte des Querschnitts des Zwischenraumes 1 durch das Schott 6 abgedichtet wird.

Aus Figur 3 geht insbesondere die horizontale Anordnung der oben beschriebenen Komponenten hervor, insbesondere die Lage des Schotts 6 zwischen Dach 2 und Zwischendecke 3 sowie des Klimastutzens 5.

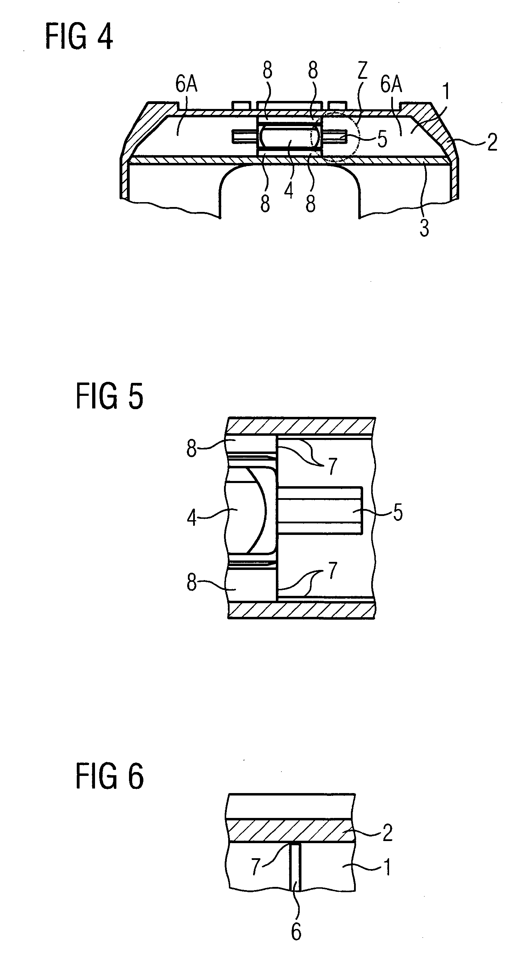

Figur 4 zeigt eine Querschnitts-Ansicht des Dachbereichs, wobei insbesondere die Befestigung des Klimakanals 4 über Metallschienen 8 zum Dach 2 und zur Zwischendecke 3 hin veranschaulicht wird. Die Metallschienen 8, die sich längs des Schienenfahrzeugs erstrecken, bilden zum Zwischenraum 1 hin ebene Abschlussflächen. Zur Anbringung des Teil-Schotts 6A ist auf den beiden genannten Flächen in vertikaler Ausrichtung ein Klettband 7 vorgesehen, das sich von diesen Flächen aus entlang einer Innenseite des Daches bis zu einer Stelle, bei der das Dach die Außenkante der Zwischendecke 3 berührt und von da aus auf einer Oberseite entlang der Zwischendecke 3 bis hin zu zwei übereinander liegenden Metallschienen 8. Dieses Klettband 7 dient zur Befestigung des Schotts 6 aus textilem Brandschutz-Material derart, dass der Zwischenraum 1 wirksam abgedichtet wird. Aus Gründen der Einfachheit der Zeichnung sind in Figur 4 nur auf der rechten Seite die einschlägigen Bezugszeichen angegeben worden. Dieselben oben beschriebenen Elemente finden sich ebenso auf der linken Seite des Dachbereiches des Schienenfahrzeugs.

Gerade der Befestigungsbereich in der Nähe des Halters 5 für den Klimakanal 4 ist in Figur 5 näher veranschaulicht, die ein Detail Z von Figur 4 vergrößert zeigt.

Figur 6 zeigt ein Detail Y von Figur 3, insbesondere eine Anordnung des Klettbandes 7 zwischen einer Innenseite des Daches 2 und dem Schott 6.

Alternativ zu der Ausbildung des Klimakanals 4 aus textilem Material kann dieser ebenso aus biegesteifen Material hergestellt sein. Die Funktionsweise der Erfindung bleibt dabei gleich.

Es ist hervorzuheben, dass die Befestigungslinien, die bei dem vorstehend erläuterten Ausführungsbeispiel mit einem Klettband 7 belegt sind, ebenso eine Nietenreihe aufweisen können, mit der das Teil-Schott 6A mit dem Klimakanal 4, dem Dach 2 und der Zwischendecke 3 verbunden werden kann. Insofern kann das Bezugszeichen "7" auch stellvertretend für eine Nietenreihe verstanden werden.

## Patentansprüche

1. Fahrzeug zur Personenbeförderung, mit einem Klimakanal (4), der in einem lang gestreckten, von Wandungen begrenzten Zwischenraum (1) geführt ist, und mit wenigstens einem im wesentlichen senkrecht zu dem Klimakanal (4) verlaufenden Schott (6) zwischen dem Klimakanal (4) und den Wandungen, **dadurch gekennzeichnet, dass**
das wenigstens eine Schott aus einem textilen Brandschutz-Material hergestellt ist.

2. Fahrzeug nach Anspruch 1,
**dadurch gekennzeichnet, dass**
das Schott (6) lösbar mit dem Klimakanal (4) und den Wandungen verbunden ist.

3. Fahrzeug nach Anspruch 2,
**dadurch gekennzeichnet, dass**
das Schott (6) über wenigstens ein Befestigungsband (7) mit dem Klimakanal (4) und den Wandungen verbindbar ist.

4. Fahrzeug nach Anspruch 3,
**dadurch gekennzeichnet, dass**
das Befestigungsband als Klettband (7) ausgebildet ist.

5. Fahrzeug nach einem der Ansprüche 1 bis 4,
**dadurch gekennzeichnet, dass**
der Klimakanal (4) aus einem textilen Material hergestellt ist.

6. Fahrzeug nach Anspruch 5,
**dadurch gekennzeichnet, dass**
ein Befestigungsband (7) zur Anbindung des Schotts (6) an den Klimakanal (4) mit demselben vernäht ist.

7. Fahrzeug nach einem der Ansprüche 5 oder 6,
**dadurch gekennzeichnet, dass**
der Klimakanal (4) zwischen in Längsrichtung des Fahrzeugs verlaufenden Schienen geführt ist.

8. Fahrzeug nach einem der Ansprüche 1 bis 4, ,
**dadurch gekennzeichnet, dass**
der Klimakanal (4) aus biegesteifem Material hergestellt ist.

9. Fahrzeug nach einem der Ansprüche 1 bis 4 oder 8,
**dadurch gekennzeichnet, dass**
das Schott (6) wenigstens teilweise mit dem Klimakanal (4) und/oder den Wandungen vernietet ist.

10. Fahrzeug nach einem der vorhergehenden Ansprüche,
**dadurch gekennzeichnet, dass**
der Zwischenraum (1) im Dachbereich eines Schienenfahrzeugs verläuft und die Wandungen von einem Dach (2) und einer Zwischendecke (3) des Schienenfahrzeugs gebildet sind.

11. Fahrzeug nach einem der vorhergehenden Ansprüche,
**dadurch gekennzeichnet, dass**
das Schott (6) eine Brandschutz-Beschichtung aufweist.

12. Fahrzeug nach Anspruch 11,
**dadurch gekennzeichnet, dass**
die Beschichtung von einem applativen Kohlebildner oder einem intumeszierenden Dünnschichtbildner gebildet wird.

## Claims

1. Vehicle for conveying passengers, having an air conditioning duct (4) which extends in an elongated intermediate space (1) which is bounded by walls, and having at least one partition (6) which runs between the air conditioning duct (4) and the walls, essentially perpendicularly with respect to the air conditioning duct (4), **characterized in that** the at least one partition is manufactured from a textile fireproof material.

2. Vehicle according to Claim 1, **characterized in that** the partition (6) is detachably connected to the air conditioning duct (4) and to the walls.

3. Vehicle according to Claim 2, **characterized in that** the partition (6) can be connected to the air conditioning duct (4) and to the walls by means of at least one attachment strip (7).

4. Vehicle according to Claim 3, **characterized in that** the attachment strip is embodied as a strip (7) of touch and close fastener.

5. Vehicle according to one of Claims 1 to 4, **characterized in that** the air conditioning duct (4) is manufactured from a textile material.

6. Vehicle according to Claim 5, **characterized in that** an attachment strip (7) for connecting the partition (6) to the air conditioning duct (4) is sewn thereto.

7. Vehicle according to one of Claims 5 or 6, **characterized in that** the air conditioning duct (4) is guided between rails which run in the longitudinal direction of the vehicle.

8. Vehicle according to one of Claims 1 to 4, **characterized in that** the air conditioning duct (4) is manufactured from flexurally rigid material.

9. Vehicle according to one of Claims 1 to 4 or 8, **characterized in that** the partition (6) is riveted at least partially to the air conditioning duct (4) and/or to the walls.

10. Vehicle according to one of the preceding claims, **characterized in that** the intermediate space (1) runs in the roof area of a rail vehicle, and the walls are formed by a roof (2) and an intermediate ceiling (3) of the rail vehicle.

11. Vehicle according to one of the preceding claims, **characterized in that** the partition (6) has a fireproof coating.

12. Vehicle according to Claim 11, **characterized in that** the coating is formed by an ablative carbonizer or an intumescent thin layer former.

## Revendications

1. Véhicule de transport de personnes, comprenant un conduit ( 4 ) de conditionnement d'air, qui est guidé dans un espace ( 1 ) intermédiaire s'étendant en longueur et délimité par des parois, et au moins une cloison ( 6 ) sensiblement perpendiculaire au conduit ( 4 ) de conditionnement d'air entre le conduit ( 4 ) de conditionnement d'air et les parois,
**caractérisé en ce que**
la au moins une cloison est en une matière textile ignifuge.

2. Véhicule suivant la revendication 1,
**caractérisé en ce que**
la cloison ( 6 ) est assemblée de manière amovible au conduit ( 4 ) de conditionnement d'air et aux parois.

3. Véhicule suivant la revendication 2,
**caractérisé en ce que**
la cloison ( 6 ) peut être assemblée au conduit ( 4 ) de conditionnement d'air et aux parois par au moins un ruban ( 7 ) de fixation.

4. Véhicule suivant la revendication 3,
**caractérisé en ce que**
le ruban de fixation est constitué sous la forme d'un ruban ( 7 ) autoagrippant.

5. Véhicule suivant l'une des revendications 1 à 4,
**caractérisé en ce que**
le conduit ( 4 ) de conditionnement d'air est une matière textile.

6. Véhicule selon la revendication 5,
**caractérisé en ce que**
un ruban ( 7 ) de fixation est, pour la liaison de la cloison ( 6 ) au conduit ( 4 ) du conditionnement d'air, cousu à celui-ci.

7. Véhicule suivant l'une des revendications 5 ou 6,
**caractérisé en ce que**
le conduit ( 4 ) de conditionnement d'air passe entre des barres s'étendant dans la direction longitudinale du véhicule.

8. Véhicule suivant l'une des revendications 1 à 4,
**caractérisé en ce que**
le conduit ( 4 ) de conditionnement d'air est en une matière résistante à la flexion.

9. Véhicule suivant l'une des revendications 1 à 4 ou 8,
**caractérisé en ce que**
la cloison ( 6 ) est rivetée au moins en partie au conduit ( 4 ) de conditionnement d'air et/ou aux parois.

10. Véhicule suivant l'une des revendications précédentes,
**caractérisé en ce que**
l'espace ( 1 ) intermédiaire s'étend dans la partie de toit d'un véhicule ferroviaire et les parois sont formées par un toit ( 2 ) et par un faux plafond ( 3 ) du véhicule ferroviaire.

11. Véhicule suivant l'une des revendications précédentes,
**caractérisé en ce que**
la cloison ( 6 ) à un revêtement ignifuge.

12. Véhicule suivant la revendication 11,
**caractérisé en ce que**
le revêtement est formé par un agent applatif de carbonisation ou par un agent intumescent de formation d'une couche mince.
